# EUROPEAN PATENT APPLICATION

(11) **EP 4 588 552 A1**
(43) Date of publication of application: **23.07.2025**
(21) Application number: 23865243.2
(22) Date of filing: 25.08.2023
(51) Int. Cl.: B01D 61/36

(54) **MEMBRANE SEPARATION SYSTEM, AND METHOD FOR OPERATING MEMBRANE SEPARATION SYSTEM**

(30) Priority: 14.09.2022 JP 2022146504
(71) Applicant: NITTO DENKO CORPORATION, Ibaraki-shi Osaka 567-8680 (JP)
(72) Inventor: HIRAI, Tomoya, Ibaraki-shi, Osaka 567-8680 (JP); KIMURA, Naomichi, Ibaraki-shi, Osaka 567-8680 (JP); NAKANO, Takeshi, Ibaraki-shi, Osaka 567-8680 (JP)
(74) Representative: Hoffmann Eitle
(86) International application number: PCT/JP2023/030827
(87) International publication number: WO 2024/057886

(57) **Abstract**

The present invention provides a membrane separation system suitable for recovering an organic compound efficiently. A membrane separation system 100 includes a membrane separation unit 10, a decompression unit 30, a first condensation unit 201, and a second condensation unit 202. The membrane separation unit 10 has a pervaporation membrane that separates a feed liquid S containing a volatile organic compound C and a gas G into a permeated fluid S₁ and a non-permeated fluid S₂, and a feed space and a permeation space separated from each other by the pervaporation membrane. The decompression unit 30 decompresses an inside of the permeation space of the membrane separation unit 10. The first condensation unit 201 is disposed between the membrane separation unit 10 and the decompression unit 30 and condenses the organic compound C contained in the permeated fluid S₁ discharged from the membrane separation unit 10. The second condensation unit 202 condenses the organic compound C contained in the permeated fluid S₁ discharged from the decompression unit 30.

## Description

### TECHNICAL FIELD

The present invention relates to a membrane separation system and a method for operating a membrane separation system.

### BACKGROUND ART

As an example of the method for separating a volatile organic compound from an aqueous solution containing the organic compound, a pervaporation method using a pervaporation membrane is known. The pervaporation method is suitable for separating a volatile organic compound from an aqueous solution containing various substances. The pervaporation method also tends to be able to better suppress the amount of energy consumption and the amount of emission of a gas, such as carbon dioxide, than a distillation method. There has been proposed a technique to produce a volatile organic compound continuously by combining a membrane separation device that performs the pervaporation method with a reaction vessel that produces the volatile organic compound. For example, Patent Literature 1 discloses a membrane separation system obtained by combining a membrane separation device with a reaction vessel.

### CITATION LIST

### Patent Literature

Patent Literature 1: JP 4048279 B

### SUMMARY OF INVENTION

### Technical Problem

The pervaporation method can be performed using a membrane separation unit that has a pervaporation membrane, and a feed space and a permeation space separated from each other by the pervaporation membrane. An inside of the permeation space is decompressed in a state in which a feed liquid is in contact with the pervaporation membrane, so that the feed liquid permeating through the pervaporation membrane evaporates. Thereby, a permeation fluid that is a gaseous matter is obtained. Conventionally, in a membrane separation system using the pervaporation method, the inside of the permeation space is decompressed by a decompression unit provided at a position subsequent to the membrane separation unit. The obtained permeated fluid that is a gaseous matter is liquefied in a condensation unit provided at a position subsequent to the decompression unit, so that the permeated fluid that is a liquid is obtained.

Given the fact that the pervaporation membrane even allows a gas contained in the feed liquid to permeate therethrough, the present inventors found that a gas, such as carbon dioxide, remains in the permeated fluid that is a gaseous matter and that has been separated by the pervaporation membrane. In a conventional membrane separation system using the pervaporation method, the permeated fluid that is a gaseous matter is supplied to the condensation unit as a gaseous emission from the decompression unit while still containing the gas. The gas, such as carbon dioxide, contained in the permeated fluid that is a gaseous matter decreases condensation efficiency of the condensation unit, and as a result, efficiency in recovering the organic compound is decreased.

Therefore, the present invention is intended to provide a membrane separation system suitable for recovering an organic compound efficiently.

### Solution to Problem

The present invention provides a membrane separation system including a membrane separation unit, a decompression unit, a first condensation unit, and a second condensation unit, wherein
the membrane separation unit has a pervaporation membrane that separates a feed liquid containing a volatile organic compound and a gas into a permeated fluid and a non-permeated fluid, and a feed space and a permeation space separated from each other by the pervaporation membrane,
the decompression unit decompresses an inside of the permeation space of the membrane separation unit,
the first condensation unit is disposed between the membrane separation unit and the decompression unit and condenses the organic compound contained in the permeated fluid discharged from the membrane separation unit, and
the second condensation unit condenses the organic compound contained in the permeated fluid discharged from the decompression unit.

In another aspect, the present invention provides a method for operating a membrane separation system including a membrane separation unit, a decompression unit, a first condensation unit, and a second condensation unit,
the first condensation unit being disposed between the membrane separation unit and the decompression unit,
the membrane separation unit having a pervaporation membrane, and a feed space and a permeation space separated from each other by the pervaporation membrane,
the method including:
   separating a feed liquid containing a volatile organic compound and a gas into a permeated fluid and a non-permeated fluid with the pervaporation membrane of the membrane separation unit;
   condensing, with the first condensation unit, the organic compound contained in the permeated fluid discharged from the membrane separation unit; and
   condensing, with the second condensation unit, the organic compound contained in the permeated fluid discharged from the decompression unit, wherein
   the separating includes decompressing, with the decompression unit, an inside of the permeation space of the membrane separation unit.

### Advantageous Effects of Invention

The present invention can provide a membrane separation system suitable for recovering an organic compound efficiently.

### BRIEF DESCRIPTION OF DRAWINGS

FIG. 1 is a schematic configuration diagram showing an example of a membrane separation system of the present embodiment.
FIG. 2 is a schematic configuration diagram showing a first condensation unit and a second condensation unit included in the membrane separation system.
FIG. 3 is a schematic cross-sectional view showing an example of a membrane separation unit included in the membrane separation system.
FIG. 4 is a schematic cross-sectional view of a pervaporation membrane included in the membrane separation unit.
FIG. 5 is a developed perspective view schematically showing another example of the membrane separation unit.
FIG. 6 is a schematic configuration diagram showing a separation system used in Calculation Examples 1 and 6.
FIG. 7 is a schematic configuration diagram showing a conventional membrane separation system.

### DESCRIPTION OF EMBODIMENTS

A membrane separation system according to a first aspect of the present invention includes a membrane separation unit, a decompression unit, a first condensation unit, and a second condensation unit, wherein
the membrane separation unit has a pervaporation membrane that separates a feed liquid containing a volatile organic compound and a gas into a permeated fluid and a non-permeated fluid, and a feed space and a permeation space separated from each other by the pervaporation membrane,
the decompression unit decompresses an inside of the permeation space of the membrane separation unit,
the first condensation unit is disposed between the membrane separation unit and the decompression unit and condenses the organic compound contained in the permeated fluid discharged from the membrane separation unit, and
the second condensation unit condenses the organic compound contained in the permeated fluid discharged from the decompression unit.

According to a second aspect of the present invention, for example, in the membrane separation system according to the first aspect, a pressure in the first condensation unit is controlled to have a value lower than that of a pressure in the second condensation unit during operation.

According to a third aspect of the present invention, for example, in the membrane separation system according to the second aspect, the pressure in the first condensation unit is controlled to be in a range from 0.2 to 20.0 kPa during operation.

According to a fourth aspect of the present invention, for example, in the membrane separation system according to any one of the first to third aspects, a cooling temperature of the first condensation unit is controlled to have a value equal to or lower than that of a cooling temperature of the second condensation unit during operation.

According to a fifth aspect of the present invention, for example, in the membrane separation system according to the fourth aspect, the cooling temperature of the first condensation unit is controlled to be in a range from -80°C or higher to lower than 30°C during operation.

According to a sixth aspect of the present invention, for example, in the membrane separation system according to any one of the first to fifth aspects, a refrigerant to cool the permeated fluid is allowed to pass through the first condensation unit and the second condensation unit during operation.

According to a seventh aspect of the present invention, for example, in the membrane separation system according to the sixth aspect, the refrigerant having passed through the first condensation unit is allowed to pass through the second condensation unit during operation.

According to an eighth aspect of the present invention, for example, in the membrane separation system according to any one of the first to seventh aspects, a concentration of the organic compound contained in a first condensed fluid obtained from the first condensation unit is lower than a concentration of the organic compound contained in a second condensed fluid obtained from the second condensation unit.

According to a ninth aspect of the present invention, for example, the membrane separation system according to any one of the first to eighth aspects further includes, between the first condensation unit and the decompression unit, a pressure regulating valve that adjusts a pressure in the permeation space.

A method for operating a membrane separation system according to a tenth aspect of the present invention is a method for operating a membrane separation system including a membrane separation unit, a decompression unit, a first condensation unit, and a second condensation unit,
the first condensation unit being disposed between the membrane separation unit and the decompression unit,
the membrane separation unit having a pervaporation membrane, and a feed space and a permeation space separated from each other by the pervaporation membrane,
the method including:
   separating a feed liquid containing a volatile organic compound and a gas into a permeated fluid and a non-permeated fluid with the pervaporation membrane of the membrane separation unit;
   condensing, with the first condensation unit, the organic compound contained in the permeated fluid discharged from the membrane separation unit; and
   condensing, with the second condensation unit, the organic compound contained in the permeated fluid discharged from the decompression unit, wherein
   the separating includes decompressing, with the decompression unit, an inside of the permeation space of the membrane separation unit.

The present invention will be described in detail below. The following description is not intended to limit the present invention to a specific embodiment.

### <Embodiment of membrane separation system>

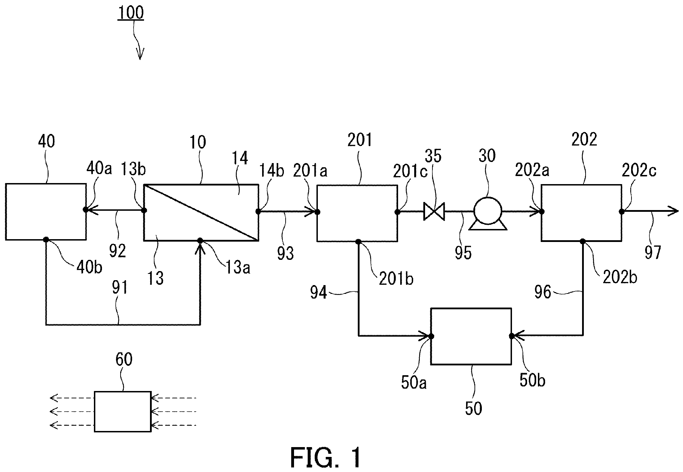

As shown in FIG. 1, a membrane separation system 100 of the present embodiment includes a membrane separation unit 10 having a pervaporation membrane, a first condensation unit 201, a decompression unit 30, and a second condensation unit 202. The first condensation unit 201 is disposed between the membrane separation unit 10 and the decompression unit 30. The second condensation unit 202 is disposed at a position subsequent to the decompression unit 30.

The membrane separation unit 10 has the pervaporation membrane, and a feed space and a permeation space separated from each other by the pervaporation membrane. The pervaporation membrane separates a feed liquid S containing a volatile organic compound C into a permeated fluid S₁ and a non-permeated fluid S₂. The decompression unit 30 decompresses an inside of the permeation space of the membrane separation unit 10. The first condensation unit 201 condenses the organic compound C contained in the permeated fluid S₁ discharged from the membrane separation unit 10. The second condensation unit 202 condenses the organic compound C contained in the permeated fluid S₁ discharged from the decompression unit 30.

The feed liquid S contains the volatile organic compound C such as an alcohol. The feed liquid S is typically a fermented liquid. The fermented liquid is obtained by fermenting a carbon source, such as glucose or a synthesis gas, in an aqueous solution by using a microorganism. Therefore, in the case where the feed liquid S is a fermented liquid, the feed liquid S contains, in addition to the volatile organic compound C, a microorganism that generates the organic compound C. The microorganism that generates the organic compound C is typically a bacterium. Generally, in the process of fermenting a carbon source in an aqueous solution, a gas, such as carbon dioxide, is generated as a byproduct. Therefore, a gas is present as a dissolved gas G in the feed liquid S obtained by the fermentation. The gas G includes carbon dioxide. The feed liquid S contains, for example, water other than the organic compound C, the microorganism, and the gas G. The feed liquid S is typically an aqueous solution containing the organic compound C, the microorganism, and the gas G.

In the membrane separation system 100, the first condensation unit 201 is disposed between the membrane separation unit 10 and the decompression unit 30, and furthermore, the second condensation unit 202 is disposed at a position subsequent to the decompression unit 30. Such a configuration makes it possible to reduce an amount of the permeated fluid S₁ to be discharged from its system, thereby making it possible to suppress a decrease in condensation efficiency. As a result, efficiency in recovering the organic compound C is improved. The membrane separation system 100 of the present embodiment is particularly effective in the case where the feed liquid S is a fermented liquid.

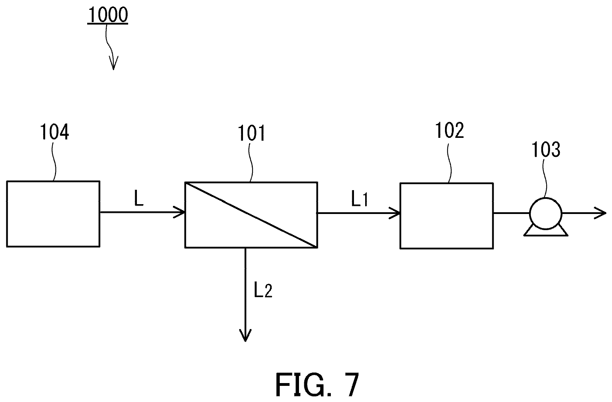

FIG. 7 is a schematic configuration diagram showing a conventional membrane separation system 1000 that uses the pervaporation method. The membrane separation system 1000 includes a membrane separation unit 101 having a pervaporation membrane, a condensation unit 102, and a decompression unit 103. The condensation unit 102 is provided between the membrane separation unit 101 and the decompression unit 103. Note that the reference numeral 104 indicates a tank that stores a feed liquid L to be supplied to the membrane separation unit 101. As described above, the pervaporation membrane even allows a gas contained in the feed liquid to permeate therethrough. Therefore, when the feed liquid L is separated into a permeated fluid L₁ and a non-permeated fluid L₂ with the pervaporation membrane of the membrane separation unit 101, a gas, such as carbon dioxide, remains in the permeated fluid L₁ that has been separated. In the membrane separation system 1000, the permeated fluid L₁ discharged from the membrane separation unit 101 is supplied to the condensation unit 102 while still containing the gas. Condensation efficiency of the condensation unit 102 depends on a partial pressure of a gaseous matter to be condensed. Therefore, the gas contained in the permeated fluid L₁ decreases the condensation efficiency of the condensation unit 102, and as a result, the efficiency in recovering the organic compound is decreased. The permeated fluid L₁ having failed to be condensed because of the presence of the gas is discharged from its system.

The present inventors have found it possible to reduce the amount of the permeated fluid S₁ to be discharged from its system by allowing the second condensation unit 202 to be disposed at a position subsequent to the decompression unit 30 while allowing the first condensation unit 201 to be disposed between the membrane separation unit 10 and the decompression unit 30. The permeated fluid S₁ discharged from the membrane separation unit 10 is first supplied to the first condensation unit 201 so that the organic compound C is condensed. The permeated fluid S₁ supplied to the first condensation unit 201 contains the gas G. As described above, condensation efficiency of the first condensation unit 201 depends on a partial pressure of a gaseous matter to be condensed. Therefore, the permeated fluid S₁ having failed to be condensed because of the presence of the gas G is discharged from the first condensation unit 201. In the membrane separation system 100 of the present embodiment, the permeated fluid S₁ discharged from the first condensation unit 201 is supplied to the second condensation unit 202 as a gaseous emission from the decompression unit 30 so that the organic compound C is condensed further in the second condensation unit 202. Accordingly, it is possible to reduce the amount of the permeated fluid S₁ to be discharged from its system.

In the membrane separation system 100, a pressure P₁ in the first condensation unit 201 may be controlled to have a value lower than that of a pressure P₂ in the second condensation unit 202 during operation. By controlling P₁ and P₂ in such a manner that P₁ < P₂ is satisfied during operation, it is possible to improve the efficiency in recovering the organic compound C.

The pressure P₁ in the first condensation unit 201 may be controlled to be in a range from 0.1 to 20.0 kPa during operation. The pressure P₁ may be controlled to be in a range from 0.1 to 10.0 kPa, or in a range from 0.1 to 5.0 kPa. The pressure P₁ is 1.5 kPa, for example.

The pressure P₂ in the second condensation unit 202 may be controlled to be in a range from 50.0 to 101.325 kPa during operation. The pressure P₂ may be controlled to be in a range from 70.0 to 101.325 kPa, or in a range from 90.0 to 101.325 kPa. The pressure P₂ is an atmospheric pressure (101.325 kPa), for example.

A cooling temperature T₁ of the first condensation unit 201 may be controlled to have a value equal to or lower than that of a cooling temperature T₂ of the second condensation unit 202 during operation. By controlling T₁ and T₂ in such a manner that T₁ ≤ T₂ is satisfied during operation, it is possible to improve the efficiency in recovering the organic compound C.

The cooling temperature T₁ of the first condensation unit 201 may be controlled to be in a range from -80 to 10°C during operation. The cooling temperature T₁ may be controlled to be in a range from -40 to 5°C, or in a range from -20 to 0°C. The cooling temperature T₁ is -7°C, for example.

The cooling temperature T₂ of the second condensation unit 202 may be controlled to be in a range from -80 to 20°C during operation. The cooling temperature T₂ may be controlled to be in a range from -40 to 15°C, or in a range from -20 to 10°C. The cooling temperature T₂ is -7°C, for example.

It is possible to control the pressure P₁ in the first condensation unit 201 and the pressure P₂ in the second condensation unit 202 by controlling a behavior of the decompression unit 30. The behavior of the decompression unit 30 may be controlled in such a manner that P₁ < P₂ is satisfied during operation.

The decompression unit 30 may be a vacuum device such as a vacuum pump. The vacuum pump is typically a gas transport vacuum pump, and a reciprocating vacuum pump and a rotary vacuum pump, etc. can be mentioned. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps such as a roots dry pump, a claw dry pump, a screw dry pump, a turbo dry pump, and a scroll dry pump. The pump as the decompression unit 30 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly the pressure P₁ in the first condensation unit 201 and the pressure P₂ in the second condensation unit 202.

The first condensation unit 201 condenses the organic compound C by cooling the permeated fluid S₁ discharged from the membrane separation unit 10. In other words, the first condensation unit 201 allows the permeated fluid S₁ that is a gaseous matter to be liquefied so that a first condensed fluid S₃₁ can be obtained. The first condensed fluid S₃₁ is a fluid that is a liquid and contains the organic compound C. The second condensation unit 202 condenses the organic compound C by cooling the permeated fluid S₁ discharged from the decompression unit 30. In other words, the second condensation unit 202 allows the permeated fluid S₁ that is a gaseous matter to be liquefied so that a second condensed fluid S₃₂ can be obtained. The second condensed fluid S₃₂ is a fluid that is a liquid and contains the organic compound C.

A concentration of the organic compound C contained in the first condensed fluid S₃₁ obtained from the first condensation unit 201 is lower than a concentration of the organic compound C contained in the second condensed fluid S₃₂ obtained from the second condensation unit 202.

Each of the first condensation unit 201 and the second condensation unit 202 may be a gas-liquid heat exchanger that causes heat exchange between a cooling medium (a refrigerant), such as an antifreeze, and the permeated fluid S₁ that is a gaseous matter. That is, a refrigerant R to cool the permeated fluid S₁ is allowed to pass through the first condensation unit 201 and the second condensation unit 202 during operation. As the refrigerant R, ethylene glycol, propylene glycol, ethanol, water or the like can be used, for example.

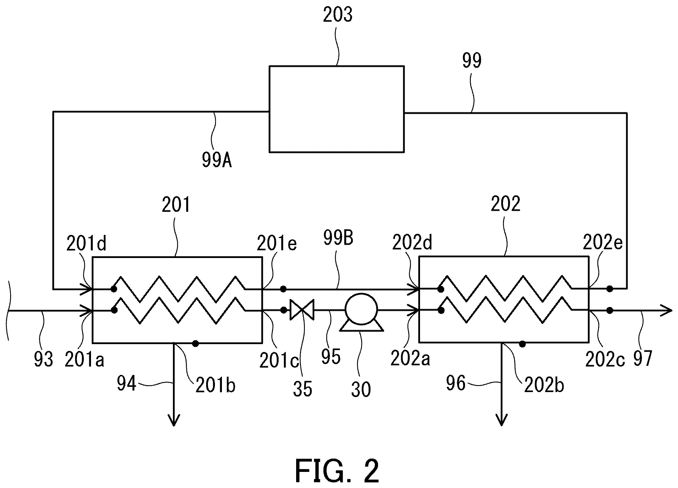

FIG. 2 is a schematic configuration diagram showing the first condensation unit 201 and the second condensation unit 202. The membrane separation unit 10 is omitted in FIG. 2. The membrane separation system 100 may include a refrigerant passage 99 as a flow passage for the refrigerant R. The refrigerant passage 99 has a first portion 99A and a second portion 99B. The first portion 99A may be connected to a refrigerant outlet 202e of the second condensation unit 202 and a refrigerant inlet 201d of the first condensation unit 201, and the second portion 99B may be connected to a refrigerant outlet 201e of the first condensation unit 201 and a refrigerant inlet 202 d of the second condensation unit 202. That is, the membrane separation system 100 may be configured in such a manner that the refrigerant R having passed through the first condensation unit 201 is allowed to pass through the second condensation unit 202 during operation. In such a manner, the refrigerant R may be used in common for the first condensation unit 201 and the second condensation unit 202.

The membrane separation system 100 may further include a cooling unit 203 for cooling the refrigerant R. The cooling unit 203 is typically a chiller. The cooling unit 203 may be provided to the first portion 99A of the refrigerant passage 99. The cooling unit 203 can cool the refrigerant R to pass through the first condensation unit 201 and the second condensation unit 202.

The refrigerant passage 99 may be provided with a temperature sensor that measures a temperature of the refrigerant R. Each of the first portion 99A and the second portion 99B may be provided with a temperature sensor that measures the temperature of the refrigerant R. Based on measurement result(s) of the temperature sensor(s), the temperature of the refrigerant R to pass through the first condensation unit 201 and the second condensation unit 202 may be controlled so that T₁ ≤ T₂ is satisfied.

The refrigerant passage 99 may be provided, for example, with a pump that controls a flow rate of the refrigerant R. The refrigerant passage 99 may not be provided with a pump.

The membrane separation system 100 may further include, between the first condensation unit 201 and the decompression unit 30, a pressure regulating valve 35 that adjusts a pressure in the permeation space of the membrane separation unit 10. As a method for adjusting the pressure in the permeation space of the membrane separation unit 10, there can be mentioned, for example, a method for introducing outside air into the decompression unit 30, and a method for adjusting a flow rate with a pressure regulating valve provided at a position preceding the decompression unit 30. The use of the pressure regulating valve 35 makes it possible to avoid an increase in an amount of the gaseous emission due to the introduction of the outside air into the decompression unit 30.

The membrane separation system 100 may further include pressure sensors (not shown) that measure respectively the pressure P₁ in the first condensation unit 201 and the pressure P₂ in the second condensation unit 202. Based on the measurement results of the pressure sensors, the behavior of the decompression unit 30 may be controlled so that P₁ < P₂ is satisfied.

The membrane separation system 100 may further include temperature sensors (not shown) that measure respectively the cooling temperature T₁ of the first condensation unit 201 and the cooling temperature T₂ of the second condensation unit 202. Based on the measurement results of the temperature sensors, a behavior of the cooling unit 203 may be controlled so that T₁ ≤ T₂ is satisfied.

The membrane separation system 100 further includes a tank 40 in addition to the membrane separation unit 10, the first condensation unit 201, the decompression unit 30, and the second condensation unit 202. The tank 40 stores the feed liquid S to be supplied to the membrane separation unit 10. The tank 40 may be a fermenter for generating the organic compound C by fermentation of a carbon source by a microorganism.

The membrane separation system 100 further includes a fermented liquid feed passage 91, a non-permeated fluid discharge passage 92, a first permeated fluid discharge passage 93, a first condensed fluid discharge passage 94, a second permeated fluid discharge passage 95, and a second condensed fluid discharge passage 96.

The fermented liquid feed passage 91 is a passage for supplying the feed liquid S from the tank 40 to the membrane separation unit 10 during operation, and is connected to an outlet 40b of the tank 40 and a fermented liquid inlet 13a of the membrane separation unit 10.

The non-permeated fluid discharge passage 92 is a passage for discharging the non-permeated fluid S₂ from the membrane separation unit 10 during operation, and is connected to a feed space outlet 13b of the membrane separation unit 10. The non-permeated fluid discharge passage 92 may be provided, for example, with a pump for controlling a flow rate of the non-permeated fluid S₂. The non-permeated fluid discharge passage 92 may not be provided with a pump.

The non-permeated fluid discharge passage 92 may be connected to an inlet 40a of the tank 40 and configured to deliver the non-permeated fluid S₂ to the tank 40 during operation. That is, the membrane separation system 100 may have a configuration in which the non-permeated fluid S₂ and the feed liquid S are mixed in the tank 40 and circulate through the fermented liquid feed passage 91 and the non-permeated fluid discharge passage 92 during operation. In the case where the non-permeated fluid S₂ is delivered to the tank 40, the feed liquid S is mixed with the non-permeated fluid S₂ and a content of the organic compound C in the feed liquid S decreases in the tank 40. In the case where the tank 40 is a fermenter, a decrease in the content of the organic compound C in the feed liquid S can inhibit the fermentation by the microorganism from stopping, thereby making it possible to produce a fermented product continuously.

The first permeated fluid discharge passage 93 is a passage for discharging the permeated fluid S₁ that is a gaseous matter from the membrane separation unit 10 during operation, and is connected to a permeation space outlet 14b of the membrane separation unit 10 and a permeated fluid inlet 201a of the first condensation unit 201. The first condensed fluid discharge passage 94 is a passage for discharging the first condensed fluid S₃₁ from the first condensation unit 201 during operation, and is connected to a first condensed fluid outlet 201b of the first condensation unit 201.

**The** second permeated fluid discharge passage 95 is a passage for discharging from the first condensation unit 201, during operation, the permeated fluid S₁ that is a gaseous matter and that has failed to be condensed because of the presence of the gas G, and is connected to a permeated fluid outlet 201c of the first condensation unit 201 and a permeated fluid inlet 202a of the second condensation unit 202. The second condensed fluid discharge passage 96 is a passage for discharging the second condensed fluid S₃₂ from the second condensation unit 202 during operation, and is connected to a second condensed fluid outlet 202b of the second condensation unit 202.

The second permeated fluid discharge passage 95 is provided with the decompression unit 30. The pressure regulating valve 35 may be disposed between the first condensation unit 201 and the decompression unit 30.

The first condensed fluid discharge passage 94 may be provided with a flowmeter that measures a flow rate of the first condensed fluid S₃₁. The second condensed fluid discharge passage 96 may be provided with a flowmeter that measures a flow rate of the second condensed fluid S₃₂.

The membrane separation system 100 may further include a recovery unit 50. The recovery unit 50 recovers the first condensed fluid S₃₁ delivered from the first condensation unit 201 and the second condensed fluid S₃₂ delivered from the second condensation unit 202, and can, for example, store the first condensed fluid S₃₁ and the second condensed fluid S₃₂. The recovery unit 50 is, for example, a tank that stores the first condensed fluid S₃₁ and the second condensed fluid S₃₂. In this case, the first condensed fluid discharge passage 94 is connected to an inlet 50a of the recovery unit 50, and the second condensed fluid discharge passage 96 is connected to an inlet 50b of the recovery unit 50.

The recovery unit 50 may be configured to recover the first condensed fluid S₃₁ and the second condensed fluid S₃₂ and store them separately. The recovery unit 50 may be composed of a tank that recovers the first condensed fluid S₃₁ delivered from the first condensation unit 201 and can, for example, store the first condensed fluid S₃₁, and a tank that recovers the second condensed fluid S₃₂ delivered from the second condensation unit 202 and can, for example, store the second condensed fluid S₃₂.

The membrane separation system 100 further includes a discharge passage 97 serving as a passage for a fluid.

The discharge passage 97 is connected to a gaseous emission outlet 202c of the second condensation unit 202.

The membrane separation system 100 may further include a control unit 60 that controls each member of the membrane separation system 100. The control unit 60 is, for example, a DSP (Digital Signal Processor) including an A/D conversion circuit, an input/output circuit, an arithmetic circuit, a storage device, etc. A program for operating properly the membrane separation system 100 is stored in the control unit 60. For example, the control unit 60 can control the behavior of the decompression unit 30 so that P₁ < P₂ is satisfied during operation. For example, the control unit 60 can control the behavior of the cooling unit 203 so that T₁ ≤ T₂ is satisfied.

Each passage of the membrane separation system 100 is composed of, for example, a metal or resin pipe unless otherwise noted.

Next, the membrane separation unit 10 included in the membrane separation system 100 of the present embodiment will be described in further detail.

### [Membrane separation unit]

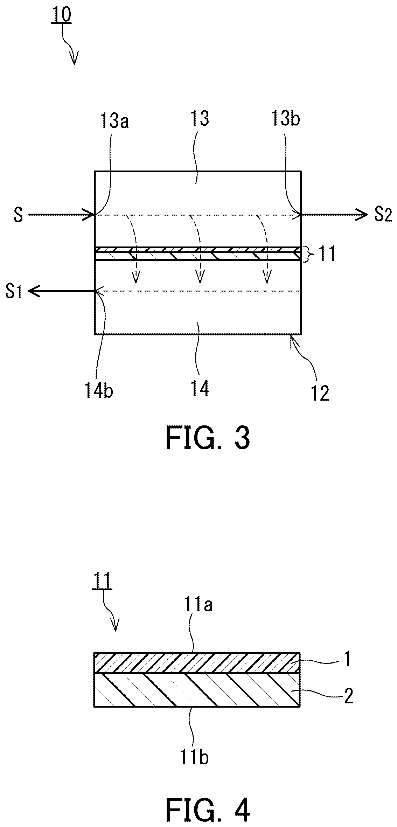

FIG. 3 is a schematic cross-sectional view showing an example of the membrane separation unit 10. As shown in FIG. 3, the membrane separation unit 10 includes a pervaporation membrane 11 and a container 12. The container 12 has a first chamber 13 and a second chamber 14. The first chamber 13 functions as the feed space to which the feed liquid S is supplied. The second chamber 14 functions as the permeation space to which the permeated fluid S₁ is supplied. The permeated fluid S₁ is obtained by allowing the feed liquid S to permeate through the pervaporation membrane 11.

The pervaporation membrane 11 is disposed in the container 12. In the container 12, the pervaporation membrane 11 separates the first chamber 13 and the second chamber 14 from each other. The pervaporation membrane 11 extends from one of a pair of wall surfaces of the container 12 to the other.

The first chamber 13 has the feed space inlet 13a and the feed space outlet 13b. The second chamber 14 has the permeation space outlet 14b. The feed space inlet 13a is an opening for supplying the feed liquid S to the feed space (the first chamber 13). The permeation space outlet 14b is an opening for discharging the permeated fluid S₁ from the permeation space (the second chamber14). The feed space outlet 13b is an opening for discharging, from the feed space (the first chamber 13), the feed liquid S (the non-permeated fluid S₂) not having permeated through the pervaporation membrane 11. The feed space inlet 13a, the feed space outlet 13b, and the permeation space outlet 14b are formed, for example, in wall surfaces of the container 12.

The membrane separation unit 10 is suitable for a flow-type (continuous-type) membrane separation method. However, the membrane separation unit 10 may be used for a batch-type membrane separation method.

### (Pervaporation membrane)

As described above, the pervaporation membrane 11 is typically a membrane (a separation membrane) that allows the organic compound C contained in the feed liquid S to preferentially permeate therethrough. The pervaporation membrane 11 allows the permeated fluid S₁ that is a gaseous matter and contains the organic compound C to be generated by a pervaporation method.

As shown in FIG. 4, the pervaporation membrane 11 includes, for example, a separation functional layer 1 and a porous support member 2 supporting the separation functional layer 1. The pervaporation membrane 11 may further include a protective layer (not shown) that protects the separation functional layer 1. The separation functional layer 1 is in direct contact with the porous support member 2, for example. For example, the pervaporation membrane 11 has a principal surface 11a, on the separation functional layer side, that is exposed to the first chamber 13 and a principal surface 11b, on the porous support member side, that is exposed to the second chamber 14.

### (Separation functional layer)

The separation functional layer 1 is typically a layer that allows the organic compound C contained in the feed liquid S to preferentially permeate therethrough. The separation functional layer 1 includes a hydrophobic material, for example. In the present description, the term "hydrophobic material" refers to, for example, a material that has a static contact angle exceeding 90° with respect to water when a 10 µL drop of the water (temperature 25°C) is dropped on a surface of a specimen composed of the material. Note that the static contact angle with respect to water can be measured using a commercially available contact angle meter.

Examples of the hydrophobic material include a compound having a siloxane bond (a Si-O-Si bond), an olefin-based polymer, an oil, and a fluorine-based compound. The separation functional layer 1 preferably includes a compound having a siloxane bond as the hydrophobic material. The compound having a siloxane bond is typically a silicone-based polymer. The silicone-based polymer may be a solid or a liquid at 25°C. Specific examples of the silicone-based polymer include polydimethylsiloxane (PDMS). Specific examples of the olefin-based polymer include polyethylene and polypropylene. Examples of the oil include a hydrocarbon-based oil such as liquid paraffin. Examples of the fluorine-based compound include polytetrafluoroethylene (PTFE), polyvinylidene fluoride (PVDF), and tetrafluoroethylene-perfluoroalkyl vinyl ether copolymer (PFA). These hydrophobic materials can be used alone or two or more of them can be used in combination.

The separation functional layer 1 may include the hydrophobic material as a main component, or may be composed substantially of the hydrophobic material alone. The term "main component" means a component having a largest content in the separation functional layer 1 in terms of weight ratio.

The separation functional layer 1 may include a matrix including the hydrophobic material and a filler dispersed in the matrix. The filler is buried in the matrix. In the matrix, all particles of the filler may be spaced from each other or may aggregate partially.

The filler includes, for example, an inorganic material such as zeolite, silica, or bentonite. The zeolite included in the filler is preferably a high-silica zeolite having a high ratio of silica with respect to alumina. Having high resistance to hydrolysis, the high-silica zeolite is suitably used for separating the feed liquid S. Examples of the high-silica zeolite to be used include HSZ (registered trademark) available from Tosoh Corporation, HiSiv (registered trademark) available from UNION SHOWA K.K., USKY available from UNION SHOWA K.K., and Zeoal (registered trademark) available from Nakamura Choukou Co., Ltd.

The filler may include a metal organic framework (MOF). The metal organic framework is also referred to as a porous coordination polymer (PCP). The metal organic framework is preferably hydrophobic. The metal organic framework includes a metal ion and an organic ligand, for example. Examples of the metal ion include a Zn ion. The organic ligand includes an aromatic ring, for example. Examples of the aromatic ring included in the organic ligand include an imidazole ring. Examples of the organic ligand include 2-methylimidazole. Specific examples of the metal organic framework include ZIF-8.

The filler is in the form of particles, for example. The term "form of particles" herein includes spherical, elliptical, flaky, and fibrous forms. An average particle diameter of the filler is, for example, but not particularly limited to, 50 µm or less, preferably 20 µm or less, and more preferably 10 µm or less. The lower limit of the average particle diameter of the filler is 0.01 µm, for example. The average particle diameter of the filler can be determined by the following method, for example. First, a cross-section of the separation functional layer 1 is observed using a transmission electron microscope. The area of a specific particle of the filler on the resulting electron microscope image is calculated by image processing. The diameter of a circle having the same area as the calculated area is regarded as the particle diameter (the diameter of the particle) of the specific filler particle. The particle diameter is calculated for any number (at least 50) of the filler particles, and the average of the calculated values is regarded as the average particle diameter of the filler.

A content of the filler in the separation functional layer 1 is, for example, 10 wt% or more, preferably 30 wt% or more, and more preferably 40 wt% or more. The upper limit of the content of the filler in the separation functional layer 1 is, for example, but not particularly limited to, 70 wt%. A content of the matrix in the separation functional layer 1 is, for example, but not particularly limited to, 30 wt% to 90 wt%.

The separation functional layer 1 has a thickness of, for example, 200 µm or less, preferably 100 µm or less, and more preferably 80 µm or less. The separation functional layer 1 may have a thickness of 1.0 µm or more, 10 µm or more, or 30 µm or more.

The separation functional layer 1 may have a microporous structure with an average pore diameter of less than 0.01 µm, but may be a dense layer having no pore on its surface.

### (Porous support member)

Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 2 may be a combination of two or more of these materials.

The porous support member 2 has an average pore diameter of 0.01 to 0.4 µm, for example. A thickness of the porous support 2 is, for example, but not particularly limited to, 10 µm or more, preferably 50 µm or more, and more preferably 100 µm or more. The thickness of the porous support 2 is, for example, 300 µm or less, and preferably 200 µm or less.

### (Protective layer)

The protective layer covers a surface of the separation functional layer 1, for example. A material of the protective layer is, for example, but not particularly limited to, a silicone resin. The material of the protective layer may be the same as that of the matrix of the separation functional layer 1. A thickness of the protective layer is, for example, but not particularly limited to, 0.5 µm or more, preferably 1 µm or more, more preferably 5 µm or more, and still more preferably 10 µm or more. The thickness of the protective layer is, for example, 100 µm or less, preferably 50 µm or less, and more preferably 30 µm or less.

### (Method for producing pervaporation membrane)

The pervaporation membrane 11 can be produced by, for example, forming the separation functional layer 1 on the porous support member 2. Specifically, a coating liquid containing the materials of the separation functional layer 1 is prepared first. The coating liquid may contain, in addition to the filler, a dispersant for dispersing the filler in the coating liquid. In the case where the coating liquid contains the compound having a siloxane bond, the coating liquid may further contain a catalyst for curing the compound. Next, the coating liquid is applied onto the porous support 2 to obtain a coating. The coating is dried to obtain the separation functional layer 1.

### <Embodiment of method for operating membrane separation system>

A method for operating the membrane separation system 100 includes: separating the feed liquid S containing the volatile organic compound C and the gas G into the permeated fluid S₁ and the non-permeated fluid S₂ with the pervaporation membrane of the membrane separation unit 10 (step 1); condensing, with the first condensation unit 201, the organic compound C contained in the permeated fluid S₁ discharged from the membrane separation unit 10 (step 2); and condensing, with the second condensation unit 202, the organic compound C contained in the permeated fluid S₁ discharged from the decompression unit 30 (step 3). The step 1 includes decompressing, with the decompression unit 30, the inside of the permeation space of the membrane separation unit 10.

As described above, in the case where the feed liquid S is a fermented liquid, the feed liquid S contains the volatile organic compound C and the microorganism that generates the organic compound C. The feed liquid S contains, for example, water other than the organic compound C, the microorganism, and the gas G. The feed liquid S is typically an aqueous solution containing the organic compound C, the microorganism, and the gas G.

The organic compound C included in the feed liquid S is not particularly limited as long as it has volatility. In the present description, the term "organic compound having volatility" refers to, for example, an organic compound that has a boiling point of 20°C to 260°C under an atmospheric pressure (101.325 kPa). Note that the organic compound C allows, for example, an aqueous phase containing water as a main component and an organic phase having a content of the organic compound C higher than that in the aqueous phase to be generated when a concentration of the organic compound C is high in the aqueous solution.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, a functional group including an oxygen atom, such as a hydroxyl group, a carbonyl group, an ether group, and an ester group. In the organic compound C, the number of the functional groups including an oxygen atom is typically one.

Examples of the organic compound C include an alcohol, ketone, and ester, and preferred is an alcohol. In the case where the organic compound C is an alcohol, the organic compound C is likely to be compatible with water and thus unlikely to cause unevenness in an environment in its system. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol, and preferred is n-butanol. N-butanol is a compound that allows two phases (an aqueous phase and an organic phase) to be generated from an aqueous solution thereof when a content of the compound in the aqueous solution is around 8 wt% or more. Therefore, in the case where the organic compound C is n-butanol, it is possible, by adjusting the content of the organic compound C in the permeated fluid S₁ to be around 8 wt% or more, for example, to generate an aqueous phase and an organic phase in the first condensed fluid S₃₁. In this case, it is possible to refine the first condensed fluid S₃₁ easily by separating the aqueous phase and the organic phase from each other. Examples of the aryl alcohol include phenol.

The ketone may be dialkylketone composed only of an alkyl group and a carbonyl group. Examples of the dialkylketone include methyl ethyl ketone (MEK) and acetone.

The ester may be aliphatic alkylester composed only of an alkyl group and an ester group. Examples of the aliphatic alkylester include ethyl acetate.

Note that the organic compound C is not limited to those mentioned above. The organic compound C may be aromatic hydrocarbon such as benzene, toluene, or xylene.

The feed liquid S may contain one kind of the organic compound C, or two or more kinds of the organic compounds C. The content of the organic compound C in the feed liquid S is, for example, 50 wt% or less, and may be 30 wt% or less, 10 wt% or less, 5 wt% or less, 2 wt% or less, or even 1 wt% or less. The lower limit of the content of the organic compound C is, for example, but not particularly limited to, 0.01 wt%.

The organic compound C may be a fermented product generated by fermentation of a carbon source by a microorganism. The organic compound C is preferably an alcohol (a bioalcohol) generated by a microorganism.

The feed liquid S may further contain an additional component, such as a carbon source, a nitrogen source, or an inorganic ion, other than the water, the organic compound C, the microorganism, and the gas G. Examples of the carbon source include polysaccharides such as starch, and monosaccharides such as glucose.

A specific method for executing the step 1 will be described by referring to the membrane separation unit 10 shown in FIG. 3 as an example. In the step 1, the feed liquid S is first supplied to the first chamber 13 of the membrane separation unit 10 via the feed space inlet 13a. This makes it possible to bring the feed liquid S into contact with one surface (the principal surface 11a, for example) of the pervaporation membrane 11.

Next, in a state in which the feed liquid S is in contact with one surface of the pervaporation membrane 11, a space adjacent to another surface (the principal surface 11b, for example) of the pervaporation membrane 11 is decompressed. Specifically, an inside of the second chamber 14 is decompressed via the permeation space outlet 14b. The inside of the second chamber 14 can be decompressed by the decompression unit 30. A pressure in the second chamber 14 is, for example, 50 kPa or less, and may be 20 kPa or less, 10 kPa or less, 5 kPa or less, 3 kPa or less, or even 2 kPa or less.

Decompressing the inside of the second chamber 14 makes it possible to obtain, on the side of the other surface of the pervaporation membrane 11, the permeated fluid S₁ having a high content of the organic compound C. In other words, the permeated fluid S₁ is supplied to the second chamber 14. In the second chamber 14, the permeated fluid S₁ is typically a gaseous matter. The permeated fluid S₁ is discharged outside the membrane separation unit 10 via the permeation space outlet 14b. The permeated fluid S₁ passes through the first permeated fluid discharge passage 93 and is supplied to the first condensation unit 201 via the permeated fluid inlet 201a.

On the other hand, the content of the organic compound C in the feed liquid S gradually decreases from the feed space inlet 13a to the feed space outlet 13b in the first chamber 13. The feed liquid S (the non-permeated fluid S₂) processed in the first chamber 13 is discharged outside the membrane separation unit 10 via the feed space outlet 13b. The non-permeated fluid S₂ is typically a liquid. The non-permeated fluid S₂ passes through the non-permeated fluid discharge passage 92 and is supplied to the tank 40 via the inlet 40a.

In the step 1, the pervaporation membrane 11 of the membrane separation unit 10 allows the organic compound C contained in the feed liquid S to preferentially permeate therethrough. Accordingly, the permeated fluid S₁ obtained by operation of the membrane separation unit 10 has a content of the organic compound C higher than that in the feed liquid S supplied to the membrane separation unit 10. A ratio of the content (wt%) of the organic compound C in the permeated fluid S₁ with respect to the content (wt%) of the organic compound C in the feed liquid S is not particularly limited.

The step 1 makes it possible, for example, to produce the permeated fluid S₁ having a high content of the organic compound C. In other words, the step 1 makes it possible to obtain the organic compound C as the permeated fluid S₁.

The step 1 includes decompressing, with the decompression unit 30, the inside of the permeation space of the membrane separation unit 10. Here, the behavior of the decompression unit 30 may be controlled in such a manner that P₁ < P₂ is satisfied during operation.

A specific method for executing the step 2 will be described by referring to the first condensation unit 201 shown in FIG. 2 as an example. In the step 2, the permeated fluid S₁ is first supplied to the first condensation unit 201 via the permeated fluid inlet 201a. The permeated fluid S₁ contains the gas G. Here, the refrigerant R is allowed to pass through the first condensation unit 201 via the refrigerant inlet 201d. Therefore, in the first condensation unit 201, heat exchange is carried out between the refrigerant R and the permeated fluid S₁ that is a gaseous matter. Thereby, the permeated fluid S₁ that is a gaseous matter is cooled and the organic compound C is condensed. The first condensed fluid S₃₁ containing the organic compound C is discharged from the first condensation unit 201 via the first condensed fluid outlet 201b. The permeated fluid S₁ having failed to be condensed because of the presence of the gas G is discharged from the first condensation unit 201 via the permeated fluid outlet 201c.

A specific method for executing the step 3 will be described by referring to the second condensation unit 202 shown in FIG. 2 as an example. In the step 3, the permeated fluid S₁ discharged from the first condensation unit 201 is supplied to the second condensation unit 202 via the permeated fluid inlet 202a as the gaseous emission from the decompression unit 30. Here, the refrigerant R is allowed to pass through the second condensation unit 202 via the refrigerant inlet 202d. Therefore, in the second condensation unit 202, heat exchange is carried out between the refrigerant R and the permeated fluid S₁ that is a gaseous matter. Thereby, the permeated fluid S₁ that is a gaseous matter is cooled and the organic compound C is condensed. The second condensed fluid S₃₂ containing the organic compound C is discharged from the second condensation unit 202 via the second condensed fluid outlet 202b. A remaining portion of the gaseous emission is discharged from the second condensation unit 202 via the gaseous emission outlet 202c.

The method for operating the membrane separation system 100 makes it possible to reduce the amount of the permeated fluid S₁ to be discharged from its system, thereby making it possible to suppress a decrease in condensation efficiency. As a result, the efficiency in recovering the organic compound C is improved.

### <Embodiment of method for producing organic compound>

A method for producing an organic compound of the present embodiment is a method for producing an organic compound using the membrane separation unit 10, the decompression unit 30, the first condensation unit 201, and the second condensation unit 202. The first condensation unit 201 is disposed between the membrane separation unit 10 and the decompression unit 30. The method for producing an organic compound of the present embodiment includes: separating the feed liquid S containing the volatile organic compound C and the gas G into the permeated fluid S₁ and the non-permeated fluid S₂ with the pervaporation membrane of the membrane separation unit 10; condensing, with the first condensation unit 201, the organic compound C contained in the permeated fluid S₁ discharged from the membrane separation unit 10; condensing, with the second condensation unit 202, the organic compound C contained in the permeated fluid S₁ discharged from the decompression unit 30; and recovering the organic compounds C. The separating includes decompressing, with the decompression unit 30, the inside of the permeation space of the membrane separation unit 10.

In the method for producing an organic compound of the present embodiment, the organic compound C may be an alcohol. The method for producing an organic compound of the present embodiment makes it possible to efficiently separate a volatile alcohol from the feed liquid S₀ containing the alcohol.

### [Modification of membrane separation unit]

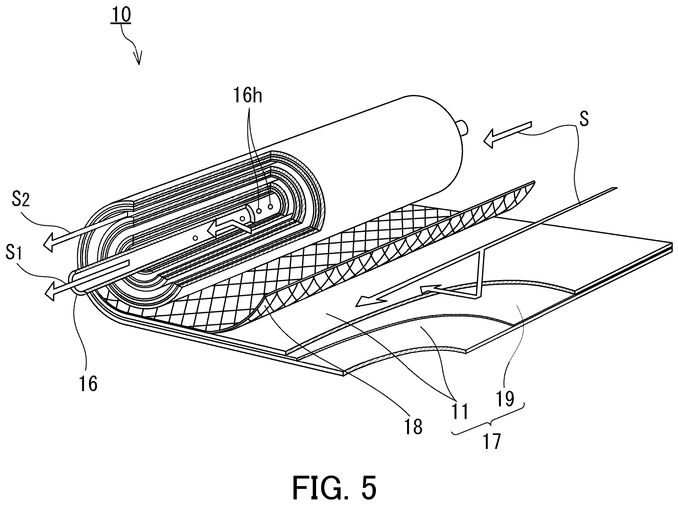

The membrane separation unit 10 may be a spiral membrane element, a hollow fiber membrane element, a disk tube membrane element in which a plurality of pervaporation membranes are laminated, a plate-and-frame membrane element, or the like. FIG. 5 is a developed perspective view showing schematically a spiral membrane element. The membrane separation unit 10 may be a spiral membrane element as shown in FIG. 5. The membrane separation unit 10 (the membrane element) in FIG.5 includes a central tube 16, and a membrane leaf 17 that has the pervaporation membrane 11 and is wound around the central tube 16.

The central tube 16 has a cylindrical shape. The central tube 16 has a surface with a through hole 16h formed therein to allow the permeated fluid S₁ to flow into the central tube 16. The number of the through holes 16h is not particularly limited and may be one, or two or more. Examples of a material of the central tube 16 include: a resin such as an acrylonitrile-butadiene-styrene copolymer resin (an ABS resin), a polyphenylene ether resin (a PPE resin), or a polysulfone resin (a PSF resin); and a metal such as stainless steel or titanium. The central tube 16 has an inner diameter in a range from, for example, 20 to 100 mm.

The membrane separation unit 10 has a plurality of the membrane leaves 17. Each of the membrane leaves 17 includes the pervaporation membrane 11 and a permeation-side flow passage material 19. For example, each of the membrane leaves 17 has two pieces of the pervaporation membranes 11. The two pieces of the pervaporation membranes 11 are stacked with each other and sealed on three sides in such a manner as to have a bag-like structure. The permeation-side flow passage material 19 is disposed between the two pieces of the pervaporation membranes 11 in such a manner as to be positioned inside the bag-like structure. The permeation-side flow passage material 19 secures, between the two pieces of the pervaporation membranes 11, a space (the permeation space) serving as a flow passage for the permeated fluid S₁. As just described above, the permeation-side flow passage material 19 is combined with the pervaporation membrane 11 and used. The number of the membrane leaves 17 is, for example, but not particularly limited to, 2 to 30.

The membrane separation unit 10 further has a feed-side flow passage material 18. The feed-side flow passage material 18 is positioned outside the above-mentioned bag-like structure and is laminated on the membrane leaf 17. Specifically, a plurality of the feed-side flow passage materials 18 and the plurality of the membrane leaves 17 are laminated alternately. The feed-side flow passage material 18 secures, between the membrane leaf 17 and the membrane leaf 17, a space (the feed space) serving as a flow passage for the feed liquid S.

As the feed-side flow passage material 18 and the permeation-side flow passage material 19, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used, for example.

An outer circumferential surface of the membrane element is composed of a shell (not shown) made from a material through which a fluid cannot permeate. The shell may be made from FRP (fiber reinforced plastic). The membrane element may be accommodated in a casing (not shown).

The membrane separation unit 10 (the membrane element) in FIG. 5 can be operated by the following method, for example. First, the feed liquid S is supplied into an end of the wound membrane leaf 17. A space inside the central tube 16 is decompressed. The decompression can be carried out by the decompression unit 30. The permeated fluid S₁ having permeated through the pervaporation membrane 11 of the membrane leaf 17 thereby moves into the central tube 16. The permeated fluid S₁ is discharged outside via the central tube 16. The feed liquid S (the non-permeated fluid S₂) processed by the membrane separation unit 10 is discharged outside from another end of the wound membrane leaf 17.

### <Modification of membrane separation system>

The membrane separation system 100 of the present embodiment may include a plurality of the membrane separation units 10, and the plurality of the membrane separation units 10 may be connected to each other in series or in parallel. In the present description, the phrase "a plurality of the membrane separation units 10 are connected to each other in series" refers to a configuration in which a plurality of the membrane separation units 10 are connected to each other in such a manner that the feed liquid S (the non-permeated fluid during operation of the membrane separation system) discharged from the feed space of the membrane separation unit 10 that precedes is supplied to the feed space of the membrane separation unit 10 that follows the preceding one. The phrase "a plurality of the membrane separation units 10 are connected to each other in parallel" refers to a configuration in which a plurality of the membrane separation units 10 are connected to each other in such a manner that the feed liquid S delivered from the tank 40 is supplied to the feed space of each of the plurality of the membrane separation units 10. The number of the membrane separation units 10 in the membrane separation system 100 is, for example, but not particularly limited to, 2 to 5. The membrane separation system 100 of the present embodiment may have a configuration in which a plurality of units each having a plurality of the membrane separation units 10 connected to each other in series are included and these units are connected to each other in parallel. For example, the membrane separation system 100 may include two units each having three membrane separation units 10 connected to each other in series, and the two units may be connected to each other in parallel.

The above description of one embodiment is applicable to the other embodiments unless technical inconsistency occurs. The above embodiments and modifications may be combined with each other unless technical inconsistency occurs.

### EXAMPLES

Hereinafter, the present invention will be described in more detail by way of Calculation Examples, but the present invention is not limited to these examples.

### [Production of pervaporation membrane]

First, a pervaporation membrane was produced by the following method. A coating liquid was prepared by mixing 1.650 kg (solids concentration: 30 wt%) of a silicone resin (YSR3022 available from Momentive Performance Materials Japan LLC.), 2.805 kg of toluene, 0.495 kg of a high-silica zeolite (HiSiv 3000 available from UNION SHOWA K.K.), 0.0495 kg of a silicone curing catalyst (YC6831 available from Momentive Performance Materials Japan LLC.), and 0.0495 kg of acetylacetone as a curing retardant. Next, the coating liquid was applied onto a porous support (RS-50 available from Nitto Denko Corporation) having a thickness of 150 µm to obtain a coating (thickness: 500 µm). The coating was heated at 90°C for 4 minutes and then dried to produce a separation functional layer having a thickness of 50 µm. The weight ratio between the silicone resin and the high-silica zeolite was 50:50 in the separation functional layer. A pervaporation membrane was thus obtained.

### (Calculation Examples 1 and 6)

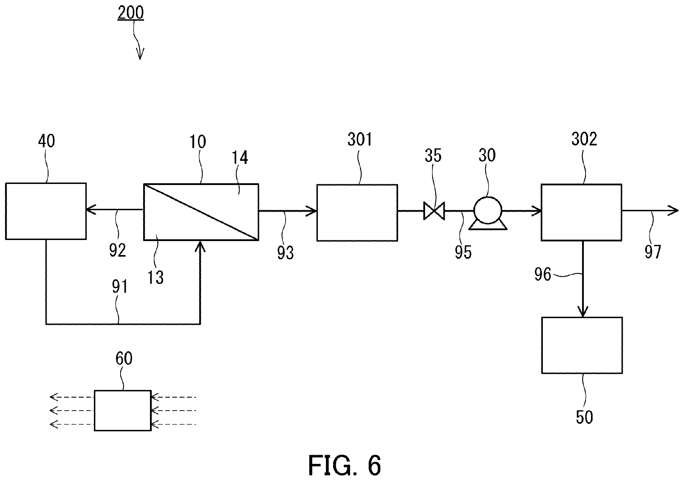

The operation of a membrane separation system 200 shown in FIG. 6 was simulated using the produced pervaporation membrane. Specifically, in the membrane separation system 200, it was assumed to use the above-mentioned pervaporation membrane as the pervaporation membrane included in the membrane separation unit 10. The membrane separation system 200 had the same configuration as that of the membrane separation system 100 shown in FIG. 1, except that the membrane separation system 200 included a first heat exchanger 301 instead of the first condensation unit 201 and a second heat exchanger 302 instead of the second condensation unit 202, and the recovery unit 50 was connected only to the second heat exchanger 302. The first heat exchanger 301 was configured to function only as a heat exchanger and to cool, but not to condense, the permeated fluid S₁ that was a gaseous matter and that had been discharged from the membrane separation unit 10. The second heat exchanger 302 was configured to condense, under an atmospheric pressure, the permeated fluid S₁ that was a gaseous matter and that had been discharged from the first heat exchanger 301.

In the operation of the membrane separation unit 10 of each of Calculation Examples 1 and 6, it was assumed that: the aqueous solution delivered from the tank 40 to the membrane separation unit 10 contained an alcohol (n-butanol or ethanol) as the volatile organic compound and the gas G; the inside of the permeation space of the membrane separation unit 10 was decompressed by the decompression unit 30 so as to obtain the permeated fluid S₁ that was a gaseous matter; the obtained permeated fluid S₁ was cooled by the first heat exchanger 301; and the permeated fluid S₁ cooled by the first heat exchanger 301 was cooled by the second heat exchanger 302 so as to condense the alcohol.

In Calculation Examples 1 and 6, the amounts (of the water and the alcohol) recovered by the second heat exchanger 302 were calculated when the assumptions shown in Table 1 were satisfied. Symmetry, a process modeling software available from Schlumberger Ltd., was used for the calculations.

### (Calculation Examples 2 to 4 and 7 to 9)

The operation of the membrane separation system 100 shown in FIG. 1 was simulated using the produced pervaporation membrane. Specifically, in the membrane separation system 100, it was assumed to use the above-mentioned pervaporation membrane as the pervaporation membrane included in the membrane separation unit 10. The membrane separation system 100 included the membrane separation unit 10, the decompression unit 30, the first condensation unit 201, the second condensation unit 202, and so on.

In the operation of the membrane separation unit 10 of each of Calculation Examples 2 to 4 and 7 to 9, it was assumed that; the feed liquid delivered from the tank 40 to the membrane separation unit 10 contained an alcohol (n-butanol or ethanol) as the volatile organic compound and the gas G; the inside of the permeation space of the membrane separation unit 10 was decompressed by the decompression unit 30 so as to obtain the permeated fluid S₁ that was a gaseous matter; the obtained permeated fluid S₁ was cooled by the first condensation unit 201 so as to condense the alcohol; and the permeated fluid S₁ that had failed to be condensed by the first condensation unit 201 was cooled further by the second condensation unit 202 so as to condense the alcohol.

In Calculation Examples 2 to 4 and 7 to 9, the amounts (of the water and the alcohol) recovered by the first condensation unit 201 and the amounts (of the water and the alcohol) recovered by the second condensation unit 202 were calculated when the assumptions shown in Table 1 were satisfied. Symmetry, a process modeling software available from Schlumberger Ltd., was used for the calculations.

### (Calculation Examples 5 and 10)

The operation of the conventional membrane separation system 1000 shown in FIG. 7 was simulated using the produced pervaporation membrane. Specifically, in the membrane separation system 1000, it was assumed to use the above-mentioned pervaporation membrane as the pervaporation membrane included in the membrane separation unit 101. The membrane separation system 1000 included the membrane separation unit 101, the condensation unit 102, and the decompression unit 103, and the condensation unit 102 was provided between the membrane separation unit 101 and the decompression unit 103. The permeated fluid L₁ discharged from the membrane separation unit 101 was supplied to the condensation unit 102 while still containing carbon dioxide.

In Calculation Examples 5 and 10, the amounts (of the water and the alcohol) recovered by the condensation unit 102 were calculated when the assumptions shown in Table 1 were satisfied. Symmetry, a process modeling software available from Schlumberger Ltd., was used for the calculations.

**[Table 1]**

| | Permeation flow rate (g/h) | | | | First condensation unit | | Second condensation unit | |
|---|---|---|---|---|---|---|---|---|
| | Alcohol | | Water | CO₂ | Temperature (°C) | Pressure (kPa) | Temperature (°C) | Pressure (kPa) |
| Calculation Example 1 | Ethanol | 29.8 | 26 | 142.3 | - | - | 30 | Atmospheric pressure (101.3) |
| Calculation Example 2 | Ethanol | 29.8 | 26 | 142.3 | 20 | 13.3 | 20 | Atmospheric pressure |
| Calculation Example 3 | Ethanol | 29.8 | 26 | 142.3 | 20 | 20 | 20 | Atmospheric pressure |
| Calculation Example 4 | Ethanol | 29.8 | 26 | 142.3 | 15 | 13.3 | 15 | Atmospheric pressure |
| Calculation Example 5 | Ethanol | 29.8 | 26 | 142.3 | 15 | 13.3 | - | - |
| Calculation Example 6 | n-butanol | 4.62 | 14.6 | 54.9 | - | - | 30 | Atmospheric pressure |
| Calculation Example 7 | n-butanol | 4.62 | 14.6 | 54.9 | 20 | 13.3 | 20 | Atmospheric pressure |
| Calculation Example 8 | n-butanol | 4.62 | 14.6 | 54.9 | 15 | 13.3 | 15 | Atmospheric pressure |
| Calculation Example 9 | n-butanol | 4.62 | 14.6 | 54.9 | -7 | 1.5 | -7 | Atmospheric pressure |
| Calculation Example 10 | n-butanol | 4.62 | 14.6 | 54.9 | 15 | 13.3 | - | - |

Table 2 shows the simulation results of Calculation Examples 1 to 10.

**[Table 2]**

| | First condensation unit Amount recovered A (g/h) | | Second condensation unit Amount recovered B (g/h) | | A + B recovery rate (%) | |
|---|---|---|---|---|---|---|
| | Alcohol | Water | Alcohol | Water | Alcohol | Water |
| Calculation Example 1 | 0 | 0 | 20.4 | 23.7 | 69 | 91 |
| Calculation Example 2 | 1.99 | 12.1 | 21.8 | 12.7 | 80 | 95 |
| Calculation Example 3 | 5.70 | 17.8 | 17.6 | 7.1 | 78 | 96 |
| Calculation Example 4 | 4.38 | 16.8 | 20.7 | 8.5 | 84 | 97 |
| Calculation Example 5 | 4.38 | 16.8 | 0 | 0 | 15 | 65 |
| Calculation Example 6 | 0 | 0 | 3.36 | 10.0 | 73 | 68 |
| Calculation Example 7 | 0.32 | 9.62 | 3.68 | 4.4 | 87 | 96 |
| Calculation Example 8 | 0.79 | 11.2 | 3.40 | 3.0 | 91 | 97 |
| Calculation Example 9 | 0.15 | 7.2 | 4.40 | 7.3 | 98 | 99 |
| Calculation Example 10 | 0.79 | 11.2 | 0 | 0 | 17 | 77 |

As understood from comparison between the simulation results of Calculation Examples 2 to 4 and those of Calculation Examples 1 and 5, in the case where the permeated fluid S₁ was cooled by the first condensation unit 201 so as to condense the ethanol and the permeated fluid S₁ that had failed to be condensed by the first condensation unit 201 was cooled further by the second condensation unit 202 so as to condense the ethanol, the ethanol recovery rate was improved significantly. As understood from comparison between the simulation results of Calculation Examples 7 to 9 and those of Calculation Examples 6 and 10, in the case where the permeated fluid S₁ was cooled by the first condensation unit 201 so as to condense n-butanol and the permeated fluid S₁ that had failed to be condensed by the first condensation unit 201 was cooled further by the second condensation unit 202 so as to condense n-butanol, the n-butanol recovery rate was improved significantly. Accordingly, the membrane separation system 100 shown in FIG. 1 was better able to reduce the amount of the permeated fluid S₁ to be discharged from its system, and thereby better suppressed a decrease in condensation efficiency than the membrane separation system 200 shown in FIG. 6 and the conventional membrane separation system 1000 shown in FIG. 7. This result reveals that the membrane separation system of the present embodiment capable of two-stage condensation is suitable for recovering an organic compound efficiently.

In the membrane separation system 100 shown in FIG. 1, the concentration of the alcohol contained in the second condensed fluid S₃₂ obtained from the second condensation unit 202 was higher than the concentration of the alcohol contained in the first condensed fluid S₃₁ obtained from the first condensation unit 201. This reveals that in the membrane separation system of the present embodiment, it is possible to obtain a condensed fluid with a higher concentration of the alcohol in the second condensation unit than that of a condensed fluid obtained in the first condensation unit.

In the membrane separation system 100 shown in FIG. 1, the ethanol recovery rate was improved significantly when the cooling temperature of the first condensation unit 201 was controlled to be in a range from -80°C or higher to lower than 30°C during operation.

In the membrane separation system 100 shown in FIG. 1, the ethanol recovery rate was improved significantly when the pressure in the first condensation unit 201 was controlled to be in a range from 0.2 to 20.0 kPa during operation.

### INDUSTRIAL APPLICABILITY

The membrane separation system of the present embodiment is suitable for recovering an organic compound efficiently.

## Claims

1. A membrane separation system comprising a membrane separation unit, a decompression unit, a first condensation unit, and a second condensation unit, wherein
the membrane separation unit has a pervaporation membrane that separates a feed liquid containing a volatile organic compound and a gas into a permeated fluid and a non-permeated fluid, and a feed space and a permeation space separated from each other by the pervaporation membrane,
the decompression unit decompresses an inside of the permeation space of the membrane separation unit,
the first condensation unit is disposed between the membrane separation unit and the decompression unit and condenses the organic compound contained in the permeated fluid discharged from the membrane separation unit, and
the second condensation unit condenses the organic compound contained in the permeated fluid discharged from the decompression unit.

2. The membrane separation system according to claim 1, wherein a pressure in the first condensation unit is controlled to have a value lower than that of a pressure in the second condensation unit during operation.

3. The membrane separation system according to claim 2, wherein the pressure in the first condensation unit is controlled to be in a range from 0.2 to 20.0 kPa during operation.

4. The membrane separation system according to claim 1, wherein a cooling temperature of the first condensation unit is controlled to have a value equal to or lower than that of a cooling temperature of the second condensation unit during operation.

5. The membrane separation system according to claim 4, wherein the cooling temperature of the first condensation unit is controlled to be in a range from -80°C or higher to lower than 30°C during operation.

6. The membrane separation system according to claim 1, wherein a refrigerant to cool the permeated fluid is allowed to pass through the first condensation unit and the second condensation unit during operation.

7. The membrane separation system according to claim 6, wherein the refrigerant having passed through the first condensation unit is allowed to pass through the second condensation unit during operation.

8. The membrane separation system according to claim 1, wherein a concentration of the organic compound contained in a first condensed fluid obtained from the first condensation unit is lower than a concentration of the organic compound contained in a second condensed fluid obtained from the second condensation unit.

9. The membrane separation system according to claim 1, further comprising, between the first condensation unit and the decompression unit, a pressure regulating valve that adjusts a pressure in the permeation space.

10. A method for operating a membrane separation system including a membrane separation unit, a decompression unit, a first condensation unit, and a second condensation unit,
the first condensation unit being disposed between the membrane separation unit and the decompression unit,
the membrane separation unit having a pervaporation membrane, and a feed space and a permeation space separated from each other by the pervaporation membrane,
the method comprising:
separating a feed liquid containing a volatile organic compound and a gas into a permeated fluid and a non-permeated fluid with the pervaporation membrane of the membrane separation unit;
condensing, with the first condensation unit, the organic compound contained in the permeated fluid discharged from the membrane separation unit; and
condensing, with the second condensation unit, the organic compound contained in the permeated fluid discharged from the decompression unit, wherein
the separating includes decompressing, with the decompression unit, an inside of the permeation space of the membrane separation unit.
